# EUROPÄISCHE PATENTSCHRIFT

(11) **EP 1 762 511 B1**
(45) Veröffentlichungstag und Bekanntmachung des Hinweises auf die Patenterteilung: **07.05.2008**
(21) Anmeldenummer: 05019718.5
(22) Anmeldetag: 09.09.2005
(51) Int. Cl.: B65G 1/08, B65G 1/04

(54) **Automatisiertes Stückgutlager mit einem einen Pufferschacht aufweisenden Bediengerät und Verfahren zum Betreiben desselben**
Automatic warehouse comprising an operating device with a buffer shaft and method for operating the warehouse
Entrepôt automatique avec transstockeur avec gaine tampon et méthode d'opération d'un tel entrepôt

(43) Veröffentlichungstag der Anmeldung: 14.03.2007
(60) Teilanmeldung: 07101909.5
(73) Patentinhaber: Rowa Automatisierungssysteme GmbH & Co. KG, 53539 Kelberg (DE)
(72) Erfinder: Hellenbrand, Christoph, 56761 Kaifenheim (DE); Groß, Dietmar, 53539 Kelberg (DE)
(74) Vertreter: Schmidt, Frank-Michael

(56) Entgegenhaltungen:
- WO-A-03/018443
- DE-A1- 2 407 756
- DE-A1- 4 336 885
- DE-A1- 19 635 396
- DE-U1- 29 703 230
- DE-U1-5202004 020 32
- US-B1- 6 409 449

## Beschreibung

Die Erfindung betrifft ein automatisiertes Lager für eine Vielzahl unterschiedlicher Stückgüter, ein Bediengerät für ein derartiges Lager sowie Verfahren zum Einlagern von Stückgütern in ein derartiges Lager.

Automatisierte Lager für eine Vielzahl unterschiedlicher Stückgüter werden beispielsweise in Apotheken oder im Pharmaziegroßhandel eingesetzt, um Arzneimittelpackungen zu lagern. Hierbei dominieren zwei Lagerkonzepte: Regallager und Schachtlager.

Bei automatisierten Regallagern, wie sie beispielsweise aus der Patentschrift DE 195 09 951 C2 bekannt sind, werden die Arzneimittelpackungen auf ebenen Lagerflächen abgelegt, wobei die Lagerflächen von Regalböden oder Schubladenböden gebildet werden. Die Arzneimittelpackungen werden in der Regel einzeln von einem oder mehreren Bediengeräten von einer Einlagerungsstation zu dem gewünschten Lagerort auf dem Regalboden transportiert und später - bei ihrer Auslagerung - von dem Lagerplatz im Regalboden entnommen und zu einer Abgabestelle transportiert. Die Regallager sind vorzugsweise chaotisch organisiert, das heißt, auf jedem Regalboden lagern unterschiedliche Arzneimittelpackungen nebeneinander, wobei eine größtmögliche Packungsdichte (Flächenbelegungsdichte) angestrebt wird. Derartige Regallager werden insbesondere dort eingesetzt, wo eine große Vielzahl unterschiedlicher Arzneimittelpackungen jeweils nur in geringer Stückzahl ein- und ausgelagert werden, beispielsweise im Apothekenbereich

Aus der DE 196 35 396 A1 ist ein Regallagersystem mit einem Bediengerät bekannt. Das Bediengerät hat eine Greifvorrichtung zum Entnehmen von Stückgütern aus den Regalen und ist verfahrbar vor den Regalböden angeordnet.

Die DE 24 07 756 beschreibt eine Vorrichtung zum Auslagern von Stückgütern aus einem Regalsystem. Eine Entnahmevorrichtung ist dazu im gleichen Winkel geneigt wie die Lageschächte des Regalsystems.

Die WO 03/018443 A1 offenbart ein Regallager, bei dem in den Regalfächern Schieber angeordnet sind. Die Schieber ermöglichen eine Auslagerung der in den Regalfächern befindlichen Stückgüter.

Bei Schachtlagern werden die Arzneimittelpackungen in geneigten Lagerschächten gehalten, wobei die Arzneimittelpackungen an einem oberen Ende des Lagerschachts eingefüllt und am unteren Ende des Lagerschachts entnommen werden können. Zwischen Einlagerung und Auslagerung rutschen die Arzneimittelpackungen den Lagerschacht hinab. In jedem Lagerschacht werden mehrere gleichartige Arzneimittelpackungen hintereinander gelagert. Für jede Arzneimittelpackungsart gibt es einen Lagerschacht. Die Dimensionen der Lagerschächte sind an die Dimensionen der Arzneimittelpackungen angepaßt. Derartige Lager werden insbesondere dort verwendet, wo Arzneimittelpackungen einer vorgegebenen Art und Abmessung häufig und vorzugsweise zu mehreren Packungen gleichzeitig eingelagert und ausgelagert werden. Beispielsweise werden derartige Lagersysteme im Großhandel eingesetzt.

Es gibt auch kombinierte Lagersysteme, bei denen der Lagerautomat gleichzeitig Regallager und Lagerschächte aufweist. Bei diesen bekannten Anordnungen werden die Arzneimittelpackungen von einem Bediengerät in die Regallager ein- und ausgelagert und darüber hinaus in die Lagerschächte eingelagert (das heißt, von dem Bediengerät in die jeweils oberen Enden der Lagerschächte eingefüllt). An ihrem unteren Ende weisen die Lagerschächte eine zusätzliche Entnahmevorrichtung auf. Die Lagerschächte enthalten jeweils gleichartige Arzneimittelpackungen. Bei diesem Mischkonzept werden die seltener und in geringerer Stückzahl benötigten Arzneimittelpackungen in dem Regallager und die häufig und in größerer Stückzahl benötigten Arzneimittelpackungen in den Schächten gelagert

Aufgabe der Erfindung ist es, die Vorteile der o.g. Maglichkeiten zur Lagerung von Arzneimittelpackungen oder anderen Stückgütern unterschiedlicher Art in einem einheitlichen Lagerkonzept zu vereinigen.

Diese Aufgabe wird erfindungsgemäß durch ein automatisiertes Lager mit den Merkmalen des Anspruchs 1, durch ein Bediengerät für ein automatisiertes Lager mit den Merkmalen des Anspruchs 12 sowie durch ein Verfahren zum Einlagern wenigstens eines Stückguts in ein automatisiertes Lager mit den Merkmales des Anspruchs 16 oder 17 gelöst.

Das erfindungsgemäße automatisierte Lager für eine Vielzahl unterschiedlicher Stückgüter weist mehrere geneigte Lagerschächte auf. Unter einem Lagerschacht soll hier irgendeine langgestreckte Aufnahme für mehrere in der geneigten Ebene (diese könnte auch in der Neigungsrichtung gekrümmt und/oder zusätzlich quer zur Neigungsrichtung geneigt sein) hintereinander angeordnete Stückgüter verstanden werden. Diese Aufnahme weist eine Auflagefläche, die auch von einem Gitter oder von Schienen gebildet sein kann, und seitliche Begrenzungen, die beispielsweise durch Wände oder Schienen gebildet werden, auf. Die Ausbildung und Abmessung der Lagerschächte kann an die zu lagernden Stückgüter angepaßt sein. Die Stückgüter sind vorzugsweise quaderförmig, können aber auch zylindrisch sein, beispielsweise die Form von Flaschen annehmen. Die unterschiedlichen Stückgüter haben bei einer bevorzugten Ausführungsform auch unterschiedliche Abmessungen. Jeder Lagerschacht weist an seinem unteren Ende eine erste Sperre zum Halten der in dem Lagerschacht liegenden Stückgüter auf. Die Sperre kann beispielsweise eine einfache starre Anschlagkante sein oder einen automatisch angesteuerten, in den Boden des Schachts versenkbaren Haltefinger umfassen. Das automatisierte Lager weist ferner ein in wenigstens zwei Raumrichtungen verfahrbares Bediengerät auf. Das Bediengerät ist bei einer bevorzugten Ausführungsform in drei Raumrichtung verfahrbar, jedoch genügt eine Verfahrbarkeit in zwei Raumrichtungen bei entsprechender Anordnung der Lagerschächte (wenn beispielsweise sämtliche unteren Enden der Lagerschächte entlang einer Linie angeordnet sind). Es können auch zwei oder mehr Bediengeräte vorgesehen sein. Das Bediengerät weist wenigstens einen geneigten Pufferschacht auf, der mehrere Stückgüter aufnehmen kann, wobei der Pufferschacht an das untere Ende eines Lagerschachts derart heranfahrbar ist, daß er nach einem Freigeben der ersten Sperre aus dem Lagerschacht austretende Stückgüter aufnehmen kann. Der Pufferschacht weist an seinem unteren Ende eine zweite Sperre zum Halten der in dem Pufferschacht liegenden Stückgüter auf. Der Pufferschacht kann in gleicher Weise wie ein Lagerschacht ausgebildet sein. Erfindungsgemäß weist das Bediengerät ferner eine Vorrichtung zum Hinauffördern von in dem Pufferschacht einliegenden Stückgütern nach oben in einen Lagerschacht auf. Die zweite Sperre zum Halten der in dem Pufferschacht liegenden Stückgüter kann beispielsweise Bestandteil der Vorrichtung zum Hinauffördern sein.

Das erfindungsgemäße automatisierte Lager ermöglicht eine Lagerung von unterschiedlichen Stückgütern innerhalb desselben Lagerschachts. Darüber hinaus ermöglicht das Lager eine Auslagerung eines Stückguts, welches sich innerhalb einer beliebigen Position des Schachts, beispielsweise an der vierten Position, befindet. Wenn ein an der vierten Position befindliches Stückgut ausgelagert werden soll, so könnte beispielsweise das Bediengerät an den Lagerschacht herangefahren werden, der Pufferschacht derart angesteuert werden, daß er die untersten vier Stückgüter aus dem Lagerschacht aufnimmt, das Bediengerät an eine Ausgabestelle gefahren werden, wo das oberste Stückgut aus dem Pufferschacht entnommen oder abgegeben wird, und schließlich das Bediengerät zu dem ursprünglichen Lagerschacht zurückgefahren und die nicht ausgelagerten drei Stückgüter von der Vorrichtung zum Hinauffördern in den Lagerschacht zurückgeschoben werden.

Ein wesentliches Element der Erfindung ist die spezielle Ausbildung des Bediengeräts, das wenigstens einen Pufferschacht zur Aufnahme mehrerer Stückgüter und eine Vorrichtung zum Hinauffördern von in dem Pufferschacht einliegenden Stückgütern in einen darüber angeordneten Lagerschacht aufweist. Die Verwendung eines derartigen Pufferschachts im Bediengerät gestattet die Auslagerung auch solcher Stückgüter, die sich nicht bereits am unteren Ende eines Lagerschachts befinden. Dies wiederum ermöglicht Lagerschächte, die gleichzeitig unterschiedliche Stückgüter aufnehmen können.

Bei einer bevorzugten Ausführungsform umfaßt die vorrichtung zum Hinauffördern einen entlang des Pufferschachts geführten Schieber. Vorzugsweise bildet der Schieber zugleich die zweite Sperre zum Halten der in dem Pufferschacht liegenden Stückgüter. Der die Sperre bildende Schieber kann beispielsweise als in den Pufferschacht hineinragender Haltefinger ausgebildet sein, der computergesteuert in dem Pufferschacht verschiebbar und unter die Bodenebene des Pufferschachts absenkbar ist.

Bei einer Ausführungsform des automatisierten Lagers sind die Lagerschächte parallel derart angeordnet, daß die unteren Enden in einer Ebene angeordnet sind. Die vereinfacht die Steuerung der Bewegungsabläufe des Bediengeräts.

Bei einer Ausführungsform sind die Lagerschächte parallel in mehreren übereinander gestapelten Ebenen angeordnet. Die Lagerschächte fallen zum Bediengerät hin ab. Bei einer Ausführungsform können die Stückgüter aus den unteren Lagerschäch ten, deren untere Enden den geringsten Abstand vom Boden aufweisen, oder auch aus den Lagerschächten mehrerer unterer Ebenen nicht nur in einen Pufferschacht des Bediengeräts sondern auch direkt auf eine unterhalb der unteren Enden dieser Lagerschächte vorgesehene zusätzliche Fördereinrichtung (beispielsweise ein quer zu den Lagerschächten verlaufendes Transportband) ausgelagert werden. Dies wird durch eine selbsttätige Sperre an jedem unteren Ende der Lagerschächte ermöglicht, die auch dann ausgelöst werden kann, wenn kein Bediengerät vor dem Schacht positioniert ist. Eine solche Auslagerungsmöglichkeit gestattet insbesondere ein schnelles Auslagern häufig und mehrfach benötigter Stückgüter, die dann vorzugsweise in die unteren Lagerschächte eingelagert werden.

Bei einer anderen Ausführungsform ist die zweite Sperre, das heißt die Sperre des Pufferschachts, vorzugsweise derart freigebbar, daß die in dem Pufferschacht einliegenden Stückgüter nach unten aus dem Pufferschacht austreten können. Die Sperre wird beispielsweise dann freigegeben, wenn das Bediengerät die in ihm gehaltenen Stückgüter an einer Abgabestelle abliefert. Die unten austretenden Stückgüter fallen beispielsweise auf ein Förderband oder eine Rutsche.

Vorzugsweise ist das Bediengerät an ein oberes Ende wenigstens eines weiteren Lagerschachts heranfahrbar, wobei nach Freigabe der zweiten Sperre in dem Pufferschacht einliegende Stückgüter in den weiteren Lagerschacht eintreten können. Die weiteren Lagerschächte sind vorzugsweise parallel derart angeordnet, daß deren obere Enden in einer Ebene angeordnet sind. An den unteren Enden der weiteren Lagerschächte befindet sich vorzugsweise eine Entnahmevorrichtung, die aus den weiteren Lagerschächten austretende Stückgüter auf eine Fördereinrichtung ausgibt. Bei dieser bevorzugten Ausführungsform werden die oberhalb des Bediengeräts angeordneten Lagerschächte vorzugsweise zur Lagerung solcher Stückgüter verwendet, die weniger häufig und in geringen Stückzahlen ausgelagert werden, während die weiteren Lagerschächte, welche von oben von dem Bediengerät befüllt werden können und die Stückgüter nach unten auf eine Fördereinrichtung ausgeben, vorzugsweise zur Lagerung häufiger und in größeren Stückzahlen benötigter Stückgüter verwendet werden. Die zum Bediengerät hin abfallenden Lagerschächte lagern vorzugsweise jeweils verschiedenartige Stückgüter, während die vom Bediengerät weg abfallenden weiteren Lagerschächte vorzugsweise jeweils Stückgüter der gleichen Art enthalten.

Bei einer vorteilhaften Weiterbildung der Erfindung weist das Bediengerät mehrere Pufferschächte mit jeweils zugehöriger zweiter Sperre auf. Beispielsweise sind zwei Pufferschächte übereinander oder nebeneinander angeordnet. Die zweiten Sperren sind vorzugsweise freigebbar, so daß die in den Pufferschächten einliegenden Stückgüter nach unten austreten können. Es ist auch denkbar, daß von mehreren Pufferschächten des Bediengeräts nur ein Teil mit einer freigebbaren zweiten Sperre und/oder nur ein Teil mit einer Vorrichtung zum Hinauffördern von in dem Pufferschacht einliegenden Stückgütern ausgestattet ist. Bei einem Bediengerät mit zwei Pufferschächten ist es beispielsweise vorgesehen, daß ein Pufferschacht eine freigebbare zweite Sperre und der andere Pufferschacht eine nichtfreigebbare Sperre (z.B. einen Anschlag), aber eine Vorrichtung zum Hinauffördern aufweist. Bei einer anderen Ausführungsform weist das Bediengerät zwei Pufferschächte auf, die eine Vorrichtung zum Hinauffördern aufweisen, die als Schieber ausgeführt ist, der gleichzeitig die zweite Sperre bildet. Ein Bediengerät mit zwei Pufferschächten ermöglicht eine schnellere Entnahme eines Stückguts, welches sich beispielsweise nicht an der untersten Position eines Lagerschachts befindet. Zum Auslagern dieses Stückguts wird ein erster Pufferschacht des Bediengeräts an das untere Ende des Lagerschachts herangefahren. Dann werden die nicht auszulagernden Stückgüter, welche sich unterhalb des gewünschten auszulagerndes Stückguts befinden, in den ersten Pufferschacht übernommen. Anschließend wird der zweite Pufferschacht an das untere Ende des Lagerschachts herangefahren und übernimmt das gewünschte auszulagernde Stückgut. Dieser Vorgang kann auch wiederholt werden, wobei in dem einen Pufferschacht die nicht auszulagernden Stückgüter und in dem anderen Pufferschacht die auszulagernden Stückgüter gesammelt werden. Nachdem die auszulagernden Stückgüter in dem zweiten Pufferschacht gesammelt worden sind, werden entweder zunächst die nicht auszulagernden Stückgüter aus dem ersten Pufferschacht in den Lagerschacht zurückgeschoben und anschließend die auszulagernden Stückgüter zur Abgabestation transportiert oder zunächst die auszulagernden Stückgüter zur Abgabestation transportiert und anschließend das Bediengerät zum Lagerschacht zurückgefahren und die nicht auszulagernden Stückgüter in den Lagerschacht zurückgeschoben.

Anstelle des zweiten Pufferschachts kann das Bediengerät bei einer alternativen Ausführungsform auch eine andere Aufnahmeeinrichtung zum Aufnehmen eines oder mehrerer Stückgüter aufweisen.

Es können auch mehrere Bediengeräte vorgesehen sein. Beispielsweise ist es auch denkbar, daß die oben für ein Bediengerät mit zwei Pufferschächten beschriebenen Abläufe von zwei Bediengeräten mit jeweils einem Pufferschacht übernommen werden. Eine alternative Zwischenlösung bestünde darin, ein Bediengerät mit zwei Pufferschächten zu verwenden, bei dem die Pufferschächte relativ zueinander bewegbar sind.

Bei dem erfindungsgemäßen Verfahren zum Einlagern wenigstens eines Stückguts in ein automatisiertes Lager für eine Vielzahl unterschiedlicher Stückgüter wird zunächst ein Pufferschacht eines in wenigstens zwei Raumrichtungen verfahrbaren Bediengeräts mit wenigstens einem Stückgut befüllt. Der Pufferschacht kann auch mit mehreren gleichartigen oder unterschiedlichen Stückgütern befüllt werden. Dann wird das Bediengerät derart an einen Lagerschacht einer Mehrzahl geneigter Lagerschächte herangefahren, daß sich das obere Ende des geneigten Pufferschachts an dem unteren Ende des geneigten Lagerschachts befindet. Transportiert das Bediengerät gleichzeitig mehrere einzulagernde Stückgüter, so wird selbstverständlich zunächst derjenige Lagerschacht angefahren, in den das im Pufferschacht zuoberst liegende Stückgut eingelagert werden soll. Schließlich wird das Stückgut in dem Pufferschacht und über den Pufferschacht hinaus solange nach oben geschoben, bis es sich in dem Lagerschacht an einer Position befindet, an der es von einer in dem Lagerschacht angeordneten ersten Sperre gehalten werden kann. Wenn beispielsweise die Sperre lediglich von einer am unteren Ende des Lagerschachts angeordneten Anschlagkante gebildet wird, so wird das einzulagernde Stückgut (oder die einzulagernden Stückgüter) lediglich über die Anschlagkante hinübergeschoben.

Bei einer bevorzugten Ausführungsform, bei der die Breite des Pufferschachts an die Abmessungen des zu transportierenden Stückguts angepaßt werden kann (beispielsweise durch verschiebbare Seitenwandungen), wird die Breite des Pufferschachts vor Aufnahme des einzulagernden Stückguts automatisch angepaßt.

Die auf diese Weise befüllten Lagerschächte können jeweils mit gleichartigen Stückgütern befüllt werden. Soll das Lager jedoch eine große Anzahl unterschiedlicher Stückgüter aufnehmen, die jeweils nur in geringer Stückzahl vorliegen, so kann ein Lagerschacht auch mit mehreren unterschiedlichen Stückgütern befüllt werden. Bei der bevorzugten Ausführungsform wird hierbei jedoch darauf geachtet, daß die Breite der in einen Lagerschacht eingeschobenen unterschiedlichen Stückgüter (beispielsweise Arzneimittelpackungen) einen vorgegebenen Prozentsatz der Breite des Lagerschachts nicht unterschreitet. In dem Lager mit einer Vielzahl von Lagerschächten wird deren Breite in einer gewissen Rasterung eingestellt, so daß die einzelnen Lagerschächte unterschiedlicher Breite jeweils Stückgüter in einem vorgegebenen Intervall der Breitenabmessung aufnehmen. Auch die Höhe der in einen Lagerschacht aufzunehmenden Stückgüter muß innerhalb eines vorgegebenen Intervalls liegen, damit mehrere Stückgüter unterschiedlicher Höhenabmessung hintereinander in dem Lagerschacht gehalten werden können. Da die Stückgüter beim Einlagern vorab vermessen und identifiziert werden, können sie vor dem Befüllen des Pufferschachts des Bediengeräts in eine gewünschte Raumorientierung gebracht werden. Die Steuereinrichtung des automatisierten Lagers ist mit den Einrichtungen zum Vermessen, Identifizieren und Positionieren der Einlagerungsstation und darüber hinaus mit den Steuereinrichtungen des Bediengeräts gekoppelt und hat Kenntnis von den Breiten und den Füllgraden sämtlicher Lagerschächte. Die Steuereinrichtung wählt in Abhängigkeit von den erfaßten Abmessungen und den ihr bekannten Füllständen geeigneter Lagerschächte die zu wählende Orientierung für das Stückgut aus und sorgt dafür, daß das Stückgut in der gewählten Orientierung in den Pufferschacht des Bediengeräts gefüllt wird.

Bei einer bevorzugten Ausführungsform weist das Lager nicht nur solche geneigten Lagerschächte auf, die zum Bediengerät hin abfallen, sondern darüber hinaus auch Lagerschächte, die vom Bediengerät weg abfallen. Das Bediengerät weist vorzugsweise wenigstens einen Pufferschacht auf, dessen Sperre freigebbar ist, so daß die in den Pufferschacht aufgenommenen Stückgüter nach unten in einen der weiteren Lagerschächte rutschen können. Bei dieser bevorzugten Ausführungsform ist ein Einlagerungsverfahren denkbar, bei dem der Pufferschacht zunächst mit mehreren Stückgütern befüllt wird und anschließend wenigstens ein oberes in dem Pufferschacht liegendes Stückgut in einen ersten Lagerschacht hinaufgeschoben wird. Anschließend wird das Bediengerät derart an einen weiteren Lagerschacht herangefahren, daß sich ein unteres Ende des Pufferschachts an dem oberen Ende des weiteren Lagerschachts befindet. Dann wird wenigstens ein unteres in dem Pufferschacht liegendes Stückgut mittels Freigabe einer an dem unteren Ende des Pufferschachts angeordneten zweiten Sperre nach unten in das obere Ende des weiteren Lagerschachts entlassen. Bei einem Bediengerät mit einem oder vorzugsweise mehreren Pufferschächten können auf diese Weise unterschiedliche Stückgüter auf zeitsparende Weise sowohl in obere Lagerschächte (die jeweils unterschiedliche Stückgüter enthalten können) als auch in untere Lagerschächte (die jeweils Stückgüter derselben Art enthalten) eingelagert werden.

Bei einer Ausführungsform des erfindungsgemäßen Verfahrens zum Auslagern wenigstens eines Stückguts aus einem automatisierten Lager für eine Vielzahl unterschiedlicher Stückgüter wird zunächst ein in wenigstens zwei Raumrichtungen verfahrbares Bediengerät, das wenigstens zwei geneigte Pufferschächte aufweist, derart an einen von mehreren geneigten Lagerschächten, die jeweils an ihrem unteren Ende eine erste Sperre zum Halten der in dem Lagerschacht liegenden Stückgüter aufweisen, herangefahren, daß sich das obere Ende eines ersten Pufferschachts an dem unteren Ende desjenigen Lagerschachts befindet, in dem sich das auszulagernde Stückgut, jedoch nicht an der untersten Position, befindet. Dann wird die erste Sperre des Lagerschachts derart freigegeben, daß sich das bzw. die unterhalb des auszulagernden Stückguts in dem Lagerschacht befindenden Stückgüter in den ersten Pufferschacht bewegen, so daß das auszulagernde Stückgut an die unterste Position des Lagerschachts rutscht. Dann wird das Bediengerät derart an den Lagerschacht herangefahren, daß sich das obere Ende eines zweiten Pufferschachts an dem unteren Ende des Lagerschacht befindet. Erneut wird die erste Sperre derart freigegeben, daß sich das auszulagernde Stückgut (und gegebenenfalls weitere auszulagernde Stückgüter, die sich unmittelbar dahinter befinden) in den Pufferschacht bewegt. Anschließend wird das Bediengerät zu einer Abgabestelle gefahren und das wenigstens eine auszulagernde Stückgut aus dem zweiten Pufferschacht entlassen oder entnommen. Vor oder nach diesem letztgenannten Schritt können die in dem ersten Pufferschacht befindlichen, nicht auszulagernden Stückgüter wieder in denselben oder auch einen anderen Lagerschacht zurückgeschoben werden.

Vorteilhafte und/oder bevorzugte Weiterbildungen der Erfindung sind in den Unteransprüchen gekennzeichnet.

Im folgenden wird die Erfindung anhand eines in den Zeichnungen dargestellten bevorzugten Ausführungsbeispiels näher erläutert. In den Zeichnungen zeigen:
Figur 1 eine schematische Seitenansicht eines erfindungsgemäßen Bediengeräts mit zwei geneigten Pufferschächten in Zuordnung zu einigen ausgewählten Lagerschächten; und
Figur 2 eine schematische Draufsicht auf das in Figur 1 gezeigte Bediengerät neben einigen nebeneinander angeordneten Lagerschächten.

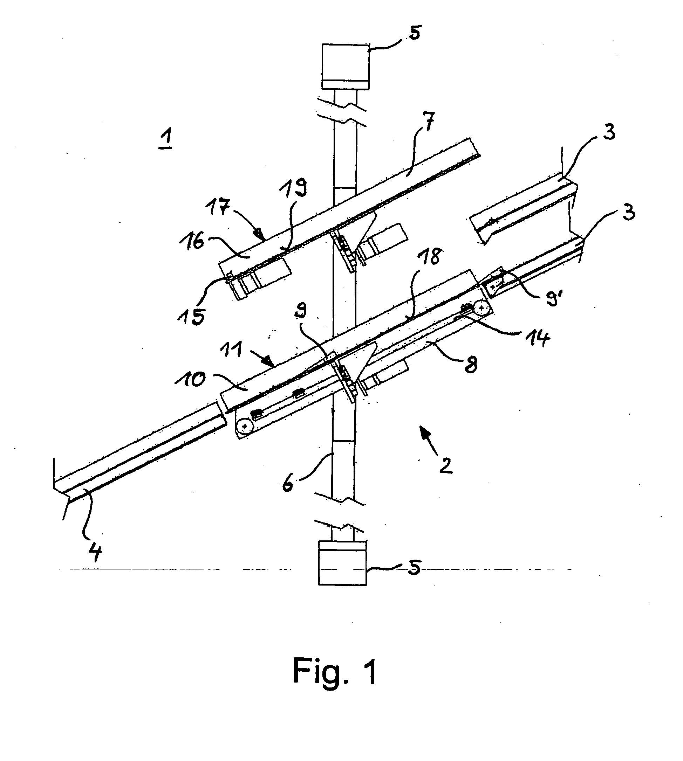

Figur 1 zeigt eine schematische Seitenansicht eines Ausschnitts eines automatisierten Lagers 1. Ein Bediengerät 2 ist in der Mitte zwischen zu dem Bediengerät hin abfallenden Lagerschächten 3 (von denen lediglich zwei gezeichnet sind) und vom Bediengerät 2 weg abfallenden Lagerschächten 4 (hier ist lediglich einer gezeigt) angeordnet. Die geneigten Lagerschächte 3 und 4 können jeweils eine Mehrzahl von Arzneimittelpackungen aufnehmen. Die Arzneimittelpackungen sind hintereinander in dem Schacht angeordnet, wobei der durch die Packungen gebildete Stapel am unteren Ende jedes Lagerschachts durch eine jeweilige Sperre gehalten wird. Bei den Lagerschächten 3 befinden sich die Sperren an dem dem Bediengerät 2 zugewandten Ende. Bei den Lagerschächten 4 befinden sich die Sperren an dem vom Bediengerät 2 abgewandten, in Figur 1 nicht gezeigten unteren Ende.

Das Bediengerät 2 ist in zwei Raumrichtungen verfahrbar, nämlich in einer großen Z-Achse entlang einer senkrechten Führungsschiene 6 sowie in einer X-Achse entlang einer am Fußboden und einer an der Decke montierten Führungsschiene 5. Das Bediengerät 2 weist zwei als "Greifer" bezeichnete Vorrichtungen 7 und 8 zum Aufnehmen von Arzneimittelpackungen auf. Die bei dem Ausführungsbeispiel gemäß Figur 1 unten dargestellte Greifer-Vorrichtung 8 weist eine geneigte Auflageebene 18 auf, über der zwei seitliche parallele Führungsbacken 10 derart geführt sind, daß zwischen den Führungsbacken 10 über der Auflageebene 18 ein geneigter Pufferschacht 11 gebildet wird. Das Bediengerät 2 weist ferner eine zweite Greifer-Vorrichtung 7 zum Aufnehmen von Arzneimittelpackungen auf. Die Greifer-Vorrichtung 7 weist ebenfalls eine geneigte Auflageebene 19 auf, über der zwei seitliche parallele Führungsbacken 16 derart angeordnet sind, daß zwischen den Führungsbacken 16 über der Auflageebene 19 ein zweiter Pufferschacht 17 gebildet wird.

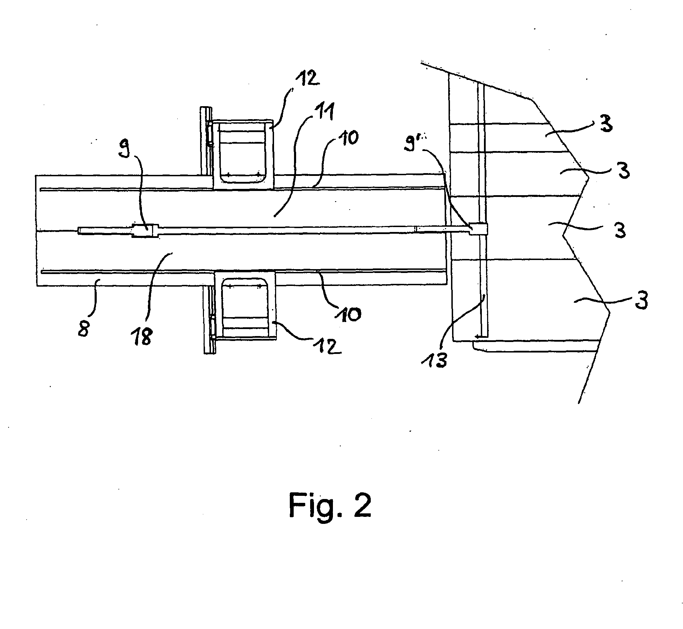

Figur 2 zeigt eine schematische Draufsicht auf einen Teil der in Figur 1 gezeigten Anordnung, nämlich eine Draufsicht auf die untere Greifer-Vorrichtung 8 und daneben angeordnete Lagerschächte 3. Wie in Figur 2 zu erkennen ist, sind die seitlichen Führungsbacken 10, die den Pufferschacht 11 seitlich begrenzen, jeweils mit Stellantrieben 12 verbunden. Mit Hilfe der Stellantriebe 12 können die Führungsbacken 11 über der Auflageebene 18 zusammen und auseinander gefahren werden, so daß die Breite des Pufferschachts 11 der Breite der darin enthaltenen Arzneimittelpackungen angepaßt werden kann.

Darüber hinaus ist in Figur 2 zu erkennen, daß die Breite der Lagerschächte 3 unterschiedlich ist, wobei die Breite den Breitenabmessungen der darin enthaltenen Arzneimittelpackungen angepaßt ist. An dieser Stelle sei bereits darauf hingewiesen, daß in jeden der Lagerschächte 3 unterschiedliche Arzneimittelpackungen eingelagert werden können, die auch unterschiedliche Breitenabmessungen aufweisen können. Allerdings sind die eingelagerten Arzneimittelpackungen insoweit an die Breite des Schachts angepaßt, als sie ein bestimmtes Maß nicht unterschreiten sollten, um beispielsweise die Gefahr eines Verkantens der Arzneimittelpackungen oder eines seitliches Verrutschens zu verringern. Gegebenenfalls kann in jedem Führungsschacht an dessen unterem Ende eine Einrichtung vorgesehen sein, die beim Einschieben der Arzneimittelpackungen dafür sorgt, daß diese eine definierte Lage im Schacht auch dann einnehmen, wenn ihre Breite geringer ist als die Breite des Schachts.

Bei dem in Figur 1 dargestellten Ausführungsbeispiel unterscheiden sich die untere Greifer-Vorrichtung 8 und die obere Greifer-Vorrichtung 7 wie folgt. Die untere Greifer-Vorrichtung 8 weist einen Schieber 9 auf, der einen in der Mitte des Pufferschachts 11 geführten, aus dem Boden 18 herausragenden Haltefinger umfaßt. Die in den Pufferschacht 11 nach unten rutschenden Packungen bleiben an dem Haltefinger des Schiebers 9 liegen. Mit Hilfe des Antriebs 14 (beispielsweise ein Seilzug mit Umlenkrollen) kann der Schieber 9 nach oben in Richtung des Lagerschachts 3 geschoben werden, wobei die in dem Pufferschacht 11 enthaltenen Packungen in den Lagerschacht 3 hineingeschoben werden. In den Figuren 1 und 2 ist der Schieber 9 jeweils in einer unteren Position und - als Schieber 9' - in einer oberen Position gezeigt. Die obere Position stellt diejenige Position dar, bei der der Schieber 9' soweit in den Lagerschacht 3 hineingefahren ist, daß sich die vor dem Schieber befindliche Arzneimittelpackung hinter einem Anschlag oder einer Sperre 13 des Lagerschachts befindet, so daß bei Aktivieren der Sperre 13 die Arzneimittelpackung im Lagerschacht 3 auch dann verbleibt, wenn der Schieber 9 in den Pufferschacht 11 zurückgefahren wird. Das Vorsehen des Schiebers 9 im unteren Pufferschacht 11 ermöglicht dessen Verwendung als Umlagerungsschacht. Aus einem Lagerschacht 3 entnommene Arzneimittelpackungen, die nach entsprechender Positionierung des oberen Endes des Pufferschachts 11 vor dem unteren Ende des Lagerschachts 3 und nach Freigabe der Sperre des Lagerschachts 3 in den Pufferschacht 11 hineingerutscht sind, können nach erneuter Positionierung des oberen Endes des Pufferschachts 11 an ein unteres Ende eines Lagerschachts 3 mit Hilfe des Schiebers 9 über die Sperre des Lagerschachts 3 hinweg in den Lagerschacht zurückgeschoben oder in einen anderen Lagerschacht hineingeschoben werden.

Die obere Greifer-Vorrichtung 7 mit dem Pufferschacht 17 weist bei dem in Figur 1 dargestellten Ausführungsbeispiel keinen Schieber, sondern lediglich einen als Auslagerungsnocken bezeichneten Anschlag 15 innerhalb des Pufferschachts 11 auf. In den Pufferschacht 17 hineinrutschende Arzneimittelpackungen werden an dessen unterem Ende durch den Auslagerungsnocken 15 gehalten. Der Pufferschacht 17 wird deshalb als Auslagerungsschacht bezeichnet. Zum Auslagern der im Pufferschacht 17 enthaltenen Arzneimittelpackungen fährt das Bediengerät 2 an eine Auslagerungsstation derart heran, daß das untere Ende des Pufferschachts 17 sich an einer Stelle befindet, an der die Arzneimittelpackungen auf eine Transporteinrichtung zur Ausgabestation übergeben werden können. Der Auslagerungsnocken 15 wird in den Boden 19 des Pufferschachts 17 zurückgefahren und die in dem Pufferschacht 17 enthaltenen Arzneimittelpackungen rutschen zur Auslagerungsstation.

Bei einem Ausführungsbeispiel kann auch der Haltefinger des Schiebers 9 unter den Boden 18 des Pufferschachts 11 gefahren werden, so daß die in dem Pufferschacht 11 enthaltenen Arzneimittelpackungen nach unten aus dem Pufferschacht hinausrutschen. Diese Möglichkeit kann beispielsweise verwendet werden, um die in den Pufferschacht 11 enthaltenen Arzneimittelpackungen an der Auslagerungsstation auszulagern oder - wie es in Figur 1 gezeigt ist - das untere Ende des Pufferschachts 11 an das obere Ende eines Lagerschachts 4 heranzufahren und einen Lagerschacht 4 mit Arzneimittelpackungen zu befüllen. Selbstverständlich kann auch der Pufferschacht 17 zum Befüllen der Lagerschächte 4 verwendet werden.

Bei alternativen Ausführungsformen kann sich die Greifer-Vorrichtung 7 des Bediengeräts 2 auch unterhalb oder neben der Greifer-Vorrichtung 8 befinden. Auch können mehr als zwei Greifer-Vorrichtungen vorgesehen sein. Darüber hinaus können beide Greifer-Vorrichtungen 7 und 8 mit einem Schieber 9 versehen sein.

Das Bediengerät 2 kann somit Arzneimittelpackungen in die Lagerschächte 3 sowohl einlagern als auch aus den Lagerschächten 3 auslagern. Darüber hinaus kann das Bediengerät 2 Arzneimittelpackungen in die Lagerschächte 4 einlagern. An den (in Figur 1 nicht gezeigten) unteren Enden der Lagerschächte 4 befinden sich Auslagerungsvorrichtungen zum Auslagern der in den Schächten 4 enthaltenen Arzneimittelpackungen, wobei die dort ausgelagerten Arzneimittelpackungen vorzugsweise auf ein Förderband ausgelagert werden. Die Lagerschächte 4 dienen (bedingt durch die Art der Auslagerung) zum Lagern von Arzneimittelpackungen jeweils derselben Art, so daß diese Schächte 4 vorzugsweise solche Arzneimittelpackungen sortenrein aufnehmen, die häufig und in größeren Stückzahlen benötigt werden. Die Lagerschächte 3 können sowohl sortenrein als auch gemischt gefüllt werden, wobei die darin enthaltenen Arzneimittelpackungen nicht nur verschiedenartig sein sondern auch verschiedene Abmessungen haben können. Deshalb dienen die Lagerschächte 3 vorzugsweise der Lagerung von Arzneimittelpackungen, die seltener und in geringeren Stückzahlen benötigt werden.

Das Einlagern von Arzneimittelpackungen kann beispielsweise wie folgt vorgenommen werden. Das Bediengerät 2 wird zu einer Einlagerungsstation gefahren. Dort wird der untere Pufferschacht 11 mit einer Arzneimittelpackung oder vorzugsweise mit mehreren Arzneimittelpackungen gleicher Art oder verschiedener Art befüllt. Zum Befüllen der sortenreinen Lagerschächte 4 kann an der Einlagerungsstation auch der obere Pufferschacht 17 mit gleichartigen Arzneimittelpackungen befüllt werden. Dann fährt das Bediengerät 2 zu den gewünschten Lagerschächten 3 bzw. 4. Sollen Arzneimittelpackungen in die Lagerschächte 3 eingelagert werden, so fährt das Bediengerät 2 derart an die Lagerschächte 3, daß sich das obere Ende des Pufferschachts 11 am unteren Ende des gewünschten Lagerschachts 3 befindet. Dann wird der Schieber 9 aktiviert und schiebt die Arzneimittelpackung bzw. die Arzneimittelpackungen nach oben in den Lagerschacht 3. Es kann vorgesehen sein, daß der Schieber 9 nur ein Teil der im Pufferschacht 11 enthaltenen Arzneimittelpackungen in den jeweiligen Lagerschacht 3 hineinschiebt und die verbleibenden wieder mit zurücknimmt. Die verbleibenden Arzneimittelpackungen können dann in einen anderen Lagerschacht 3 hineingeschoben oder nach unten in einen Lagerschacht 4 entlassen werden. Die in den Pufferschacht 17 der oberen Greifer-Vorrichtung 7 aufgenommenen Arzneimittelpackungen können in einen sortenreinen Lagerschacht 4 entlassen werden, nachdem das untere Ende des Pufferschachts 17 am oberen Ende des Lagerschachts 4 positioniert worden ist.

Während der gesamten Einlagerungsvorgänge überwacht eine Steuereinrichtung die Bewegungsabläufe und verfolgt, in welchen der Lagerschächte 3 oder 4 welche Arzneimittelpackungen an welcher Position eingelagert worden sind. Diese Informationen werden so innerhalb der Steuereinrichtung abgelegt, daß ein problemloses Wiederauffinden und späteres Auslagern einer beliebigen gewünschten Arzneimittelpackung möglich ist.

Das Auslagern von Arzneimittelpackungen kann auf verschiedene Weise geschehen. In dem sortenreinen Schacht 4 enthaltene Arzneimittelpackungen werden mit Hilfe der nicht dargestellten, am unteren Ende des Schachts 4 angeordneten Auslagerungsvorrichtung ausgelagert und auf eine Fördereinrichtung übergeben, wobei die Fördereinrichtung die ausgelagerten Arzneimittelpackungen zu einem gewünschten Ausgabeplatz transportiert. Zur Auslagerung eines an einer untersten Position eines Lagerschachts 3 befindlichen Arzneimittels (oder auch mehrerer an den untersten Positionen befindlicher Arzneimittelpackungen) genügt es, wenn beispielsweise die Greifer-Vorrichtung 7 mit ihrem oberen Ende an das untere Ende des Lagerschachts 3 heranfährt, die Sperre des Lagerschachts kurzzeitig freigegeben wird, so daß die gewünschten Arzneimittelpackungen in den Pufferschacht 17 hineinrutschen. Anschließend wird der Pufferschach 17 an eine Auslagerungsstation herangefahren und der Auslagerungsnocken 15 freigegeben, so daß die in dem Pufferschacht 17 enthaltenen auszulagernden Arzneimittelpackungen hinausrutschen können. Soll jedoch eine Arzneimittelpackung (oder auch mehrere Arzneimittelpackungen) ausgelagert werden, die sich nicht an der untersten Position im Lagerschacht 3 befindet, so wird wie folgt vorgegangen. Zunächst wird der Umlagerungs-Pufferschacht 11 an das untere Ende des Lagerschachts 3 herangefahren. Dann wird die Sperre des Lagerschachts 3 derart freigegeben, daß die unterhalb der gewünschten Arzneimittelpackung befindlichen, nicht auszulagernden Arzneimittelpackungen in den Pufferschacht 11 hineinrutschen. Dann wird der Auslagerungs-Pufferschacht 17 an das untere Ende des Lagerschachts 3 herangefahren, in dem sich jetzt die auszulagernde Arzneimittelpackung an der untersten Position befindet. Dann wird die Sperre des Lagerschachts 3 derart kurzzeitig freigegeben, daß die gewünschte Arzneimittelpackung in den Pufferschacht 17 hineinrutscht. Anschließend wird wieder der Pufferschacht 11 an das andere Ende des Lagerschachts 3 herangefahren. Dann werden die in dem Pufferschacht 11 enthaltenen nicht auszulagernden Arzneimittelpackungen mit Hilfe des Schiebers 9 zurück in den Lagerschacht 3 geschoben. Schließlich fährt das Bediengerät 2 zur Auslagerungsstation, wo die in den Auslagerungs-Pufferschacht 17 enthaltene Arzneimittelpackung (oder auch mehrere enthaltene Arzneimittelpackungen) durch Freigabe des Auslagerungsnockens 15 ausgelagert werden. Bei einer alternativen Ausführungsform, bei der eine schnellere Auslagerung gewünscht wird, kann das Bediengerät 2, bevor es die nicht auszulagernden Arzneimittelpackungen aus dem Pufferschacht 11 zurück in den Lagerschacht 3 schiebt, zunächst den Auslagerungspufferschacht 17 an die Auslagerungsstation heranfahren und die darin enthaltenen Arzneimittelpackungen auslagern. Darüber hinaus ist es auch denkbar, daß in dem Auslagerungs-Pufferschacht 17 eine Reihe von Arzneimittelpackungen (beispielsweise die zu einer Bestellung gehörenden bzw. auf einem Rezept aufgeführten Arzneimittelpackungen) gesammelt werden, bevor der Auslagerungs-Pufferschacht 17 an die Auslagerungsstation gefahren wird. Es ist auch denkbar, daß die Entscheidung, welche Reihenfolge gewählt wird, in Abhängigkeit davon getroffen wird, welchen optimalen Weg die Steuereinrichtung berechnet.

Im Rahmen des Erfindungsgedankens sind zahlreiche alternative Ausführungsformen denkbar. Beispielsweise könnten die Greifer-Vorrichtungen 7 und 8 um die Z-Achse drehbar ausgeführt sein, so daß sich zum Bediengerät 2 hin abfallende Lagerschächte 3 an beiden Seiten des Ganges, in dem das Bediengerät 3 sich entlang der X-Achse bewegt, angeordnet sein können. Die am unteren Ende der Lagerschächte 3 angeordnete Sperre kann sowohl einen eigenen Auslösemechanismus als auch einen vom Bediengerät ausgelösten Mechanismus aufweisen. Das Lagersystem eignet sich nicht nur für quaderförmige Arzneimittelpackungen, sondern darüber hinaus auch beispielsweise für Schuhkartons, Postpakete oder Flaschen. Es sind auch Ausführungsformen denkbar, bei dem mehrere Bediengeräte in dem Gang angeordnet sind oder bei dem die Greif-Vorrichtungen des Bediengeräts relativ zueinander bewegbar sind.

## Patentansprüche

1. Automatisiertes Lager (1) für eine Vielzahl unterschiedlicher Stückgüter, aufweisend:
mehrere geneigte Lagerschächte (3), wobei jeder Lagerschacht (3) an seinem unteren Ende eine erste Sperre zum Halten der in dem Lagerschacht liegenden Stückgüter aufweist,
ein in wenigstens zwei Raumrichtungen verfahrbares Bediengerät (2), wobei das Bediengerät wenigstens einen geneigten Pufferschacht (11) aufweist, der mehrere Stückgüter aufnehmen kann, wobei der Pufferschacht (11) an das untere Ende eines Lagerschachts (3) derart heranfahrbar ist, daß er nach einem Freigeben der ersten Sperre aus dem Lagerschacht austretende Stückgüter aufnehmen kann,
wobei das Bediengerät eine Vorrichtung (9) zum Hinauffördern von in dem Pufferschacht einliegenden Stückgütern nach oben in einen Lagerschacht aufweist
**dadurch gekennzeichnet, daß**
der Pufferschacht (11) an seinem unteren Ende eine zweite Sperre zum Halten der in dem Pufferschacht liegenden Stückgüter aufweist, die derart freigebbar ist, daß die in dem Pufferschacht einliegenden Stückgüter nach unten austreten können.

2. Automatisiertes Lager nach Anspruch 1, **dadurch gekennzeichnet, daß** die Vorrichtung zum Hinauffördern einen entlang des Pufferschachts geführten Schieber (9) umfaßt.

3. Automatisiertes Lager nach Anspruch 2, **dadurch** gekennzei,Chnet, daß der Schieber zugleich die zweite Sperre bildet.

4. Automatisiertes Lager nach einem der Ansprüche 1 bis 3, **dadurch gekennzeichnet, daß** die Lagerschächte (3) parallel derart angeordnet sind, daß deren untere Enden in einer Ebene angeordnet sind.

5. Automatisiertes Lager nach einem der Ansprüche 1 bis 4, **dadurch gekennzeichnet, daß** das Bediengerät (2) an ein oberes Ende wenigstens eines weiteren Lagerschachts (4) heranfahrbar ist, wobei nach Freigabe der zweiten Sperre in dem Pufferschacht (11) einliegende Stückgüter in den weiteren Lagerschacht (4) eintreten können.

6. Automatisiertes Lager nach Anspruch 5, **dadurch gekennzeichnet, daß** die weiteren Lagerschächte (4) parallel derart angeordnet sind, daß deren obere Enden in einer Ebene angeordnet sind.

7. Automatisiertes Lager nach Anspruch 5 oder 6, **dadurch gekennzeichnet, daß** an den unteren Enden der weiteren Lagerschächte (4) eine Entnahmevorrichtung angeordnet ist, die austretende Stückgüter auf eine Fördereinrichtung ausgibt.

8. Automatisiertes Lager nach einem der Ansprüche 1 bis 7, **dadurch gekennzeichnet, daß** das Freigeben der ersten Sperre von dem Bediengerät (2) auslösbar ist, wenn dieses an den Lagerschacht herangefahren ist.

9. Automatisiertes Lager nach einem der Ansprüche 1 bis 8, **dadurch gekennzeichnet, daß** das Bediengerät mehrere Pufferschächte (11, 17) mit jeweils zugehöriger zweiter Sperre aufweist.

10. Automatisiertes Lager nach Anspruch 9, **dadurch gekennzeichnet, daß** die Pufferschächte (11, 17) übereinander oder/und nebeneinander angeordnet sind.

11. Automatisiertes Lager nach einem der Ansprüche 1 bis 8, **dadurch gekennzeichnet, daß** mehrere Bediengeräte vorgesehen sind.

12. In wenigstens zwei Raumrichtungen verfahrbares Bediengerät (2) für ein automatisiertes Lager mit mehreren geneigten Lagerschächten (3) zur Aufnahme einer Vielzahl unterschiedlicher Stückgüter,
wobei das Bediengerät (2) wenigstens einen geneigten Pufferschacht (11) aufweist, der mehrere Stückgüter aufnehmen kann, wobei der Pufferschacht so ausgebildet ist, daß er nach einem Heranfahren an das untere Ende eines Lagerschachts und einem Auslösen einer ersten Sperre des Lagerschachts aus dem Lagerschacht austretende Stückgüter aufnehmen kann,
wobei der Pufferschacht an seinem unteren Ende eine zweite Sperre zum Halten von in dem Pufferschacht liegenden Stückgütern aufweiset, die derart freigebbar ist, daß die in dem Pufferschacht einliegenden Stückgüter nach unten austreten können
wobei der Pufferschacht eine Vorrichtung (9) zum Hinauffördern von in dem Pufferschacht einliegenden Stückgütern nach oben in einen Lagerschacht aufweist.

13. Bediengerät nach Anspruch 12, **dadurch gekennzeichnet, daß** die Vorrichtung zum Hinauffördern einen entlang des Pufferschachts geführten Schieber (9) umfaßt, wobei der Schieber zugleich die zweite Sperre bildet.

14. Bediengerät nach Anspruch 12, **dadurch gekennzeichnet, daß** das Bediengerät (2) derart an ein oberes Ende eines Lagerschachts (4) heranfahrbar ist, daß nach Freigabe der zweiten Sperre (9) in dem Pufferschacht (11) einliegende Stückgüter in den Lagerschacht eintreten können.

15. Bediengerät nach einem der Ansprüche 12 bis 14, **gekennzeichnet durch** mehrere Pufferschächte mit jeweils zugehöriger zweiter Sperre, wobei die Pufferschächte übereinander oder/und nebeneinander angeordnet sind.

16. Verfahren zum Einlagern wenigstens eines Stückguts in ein automatisiertes Lager für eine Vielzahl unterschiedlicher Stückgüter, wobei das Lager mehrere geneigte Lagerschächte und ein in wenigstens zwei Raumrichtungen verfahrbares Bediengerät aufweist, wobei jeder Lagerschacht an seinem unteren Ende eine erste Sperre zum Halten der in dem Lagerschacht liegenden Stückgüter aufweist, wobei das Bediengerät wenigstens einen geneigten Pufferschacht aufweist, der mehrere Stückgüter aufnehmen kann, wobei:
a) der Pufferschacht mit mehreren Stückgütern befüllt wird,
b) das Bediengerät derart an einen der Lagerschächte herangefahren wird, daß sich das obere Ende des Pufferschachts an dem unteren Ende des Lagerschachts befindet,
c) wenigstens ein oberes in dem Pufferschacht liegendes Stückgut in dem Pufferschacht und über den Pufferschacht hinaus solange nach oben geschoben wird, bis es sich in dem Lagerschacht an einer Position befindet, an der es von der ersten Sperre gehalten werden kann,
d) das Bediengerät derart an einen weiteren Lagerschacht herangefahren wird, daß sich ein unteres Ende des Pufferschachts an dem oberen Ende des weiteren Lagerschachts befindet, und
e) wenigstens ein unteres in dem Pufferschacht liegendes Stückgut mittels Freigabe einer an dem unteren Ende des Pufferschachts angeordneten zweiten Sperre nach unten in das obere Ende des weiteren Lagerschachts entlassen wird.

17. Verfahren zum Einlagern wenigstens eines Stückguts in ein automatisiertes Lager für eine Vielzahl unterschiedlicher Stückgüter, wobei das Lager mehrere geneigte Lagerschächte und ein in wenigstens zwei Raumrichtungen verfahrbares Bediengerät aufweist, wobei jeder Lagerschacht an seinem unteren Ende eine erste Sperre zum Halten der in dem Lagerschacht liegenden Stückgüter aufweist, wobei das Bediengerät wenigstens einen geneigten Pufferschacht aufweist, der mehrere Stückgüter aufnehmen kann, wobei:
a) der Pufferschacht mit dem wenigstens einen Stückgut befüllt wird,
b) das Bediengerät derart an einen der Lagerschächte herangefahren wird, daß sich das obere Ende des Pufferschachts an dem unteren Ende des Lagerschachts befindet, und
c) das Stückgut in dem Pufferschacht und über den Pufferschacht hinaus solange nach oben geschoben wird, bis es sich in dem Lagerschacht an einer Position befindet, an der es von der ersten Sperre gehalten werden kann,
d) der Pufferschachts erneut mit wenigstens einem Stückgut befüllt wird,
e) das Bediengerät derart an einen weiteren Lagerschacht herangefahren wird, daß sich ein unteres Ende des Pufferschachts an dem oberen Ende des weiteren Lagerschachts befindet, und
f) wenigstens ein unteres in dem Pufferschacht liegendes Stückgut mittels Freigabe einer an dem unteren Ende des Pufferschacht angeordneten zweiten Sperre nach unten in den weiteren Lagerschacht entlassen wird.

18. Verfahren nach Anspruch 16 oder 17, **dadurch gekennzeichnet, daß** im Schritt a) die Breite des Pufferschachts an eine Abmessung des wenigstens einen Stückguts angepaßt wird.

19. Verfahren nach einem der Ansprüche 17 bis 18, **dadurch gekennzeichnet, daß** im Schritt b) das Bediengerät an einen Lagerschacht herangefahren wird, dessen Breite an eine Abmessung des wenigstens einen Stückguts angepaßt ist.

20. Verfahren nach Anspruch 16 oder 17, **dadurch gekennzeichnet, daß** der Pufferschacht im Schritt a) mit unterschiedlichen Stückgütern befüllt wird.

21. Verfahren nach Anspruch 21, **dadurch gekennzeichnet,**
**daß** im Schritt c) mehrere Stückgüter in den Lagerschacht hinaufgeschoben werden.

22. Verfahren nach Anspruch 20, **dadurch gekennzeichnet,**
**daß** wenigstens ein oberes in dem Pufferschacht liegendes Stückgut in einen ersten Lagerschacht hinaufgeschoben, das Bediengerät zu einem zweiten Lagerschacht bewegt und wenigstens ein weiteres in dem Pufferschacht liegendes Stückgut in den zweiten Lagerschacht hinaufgeschoben wird.

23. Verfahren nach Anspruch 16, **dadurch gekennzeichnet, daß** im Schritt d) der Pufferschacht mit mehreren gleichartigen Stückgütern befüllt wird, die im Schritt f) in den weiteren Lagerschacht entlassen werden.

## Claims

1. An automated store (1) for a plurality of different products including:
a number of inclined storage shafts (3), each storage shaft (3) having at its lower end a first barrier for retaining the products situated in the storage shaft,
a service device (2), which is movable in at least two spatial directions, the service device including at least one inclined buffer shaft (11), which can receive a number of products, wherein the buffer shaft (11) may be moved towards the lower end of a storage shaft (3) such that, after opening the first barrier, it can receive products moving out of the storage shaft,
wherein the service device includes apparatus (9) for conveying products situated in the buffer shaft upwardly into a storage shaft,
**characterised in that** at its lower end, the buffer shaft (11) has a second barrier for retaining the products situated in the buffer shaft, which may be opened such that the products situated in the buffer shaft can move out downwardly.

2. An automated store as claimed in claim 1, **characterised in that** the apparatus for conveying upwardly includes a slider (9) guided along the buffer shaft.

3. An automated store as claimed in claim 2, **characterised in that** the slider simultaneously constitutes the second barrier.

4. An automated store as claimed in one of claims 1 to 3, **characterised in that** the storage shafts (3) are arranged parallel such that their lower ends are disposed in a plane.

5. An automated store as claimed in one of claims 1 to 4, **characterised in that** the service device (2) may be moved towards an upper end of at least one further storage shaft (4), whereby, after opening the second barrier, products situated in the buffer shaft (1) can move into the further storage shaft (4).

6. An automated store as claimed in claim 5, **characterised in that** the further storage shafts (4) are arranged parallel such that their upper ends are disposed in a plane.

7. An automated store as claimed in claim 5 or 6, **characterised in that** arranged at the lower ends of the further storage shafts (4) there is a removal device, which delivers exiting products onto a conveyer device.

8. An automated store as claimed in one of claims 1 to 7, **characterised in that** the opening of the first barrier may be triggered by the service device (2), when it is moved towards the storage shaft.

9. An automated store as claimed in one of claims 1 to 8, **characterised in that** the service device includes a plurality of buffer shafts (11,17) with a respective associated second barrier.

10. An automated store as claimed in claim 9, **characterised in that** the buffer shafts (11,17) are arranged above one another and/or next to one another.

11. An automated store as claimed in one of claims 1 to 8, **characterised in that** a plurality of service devices are provided.

12. A service device (2), which is movable in at least two spatial directions, for an automated store with a number of storage shafts (3) for receiving a plurality of different products,
wherein the service device (2) includes at least one inclined buffer shaft (11), which can receive a plurality of products, the buffer shaft being so constructed that after it has been moved towards the lower end of a storage shaft and after release of a first barrier in the storage shaft, it can receive products moving out of the storage shaft,
wherein at its lower end, the buffer shaft has a second barrier for retaining products situated in the buffer shaft, which may be opened such that the products situated within the buffer shaft can move out downwardly,
wherein the buffer shaft includes apparatus (9) for conveying products situated in the buffer shaft upwardly into a storage shaft.

13. A service device as claimed in claim 12, **characterised in that** the apparatus for conveying upwardly includes a slider (9) guided along the buffer shaft, wherein the slider simultaneously constitutes the second barrier.

14. A service device as claimed in claim 12, **characterised in that** the service device (2) may be moved towards an upper end of a storage shaft (4) such that, after opening the second barrier (9), products situated within the buffer shaft (11) can move into the storage shaft.

15. A service device as claimed in one of claims 12 to 14, **characterised by** a plurality of buffer shafts with a respective associated second barrier, wherein the buffer shafts are arranged above one another and/or next to one another.

16. A method of storing at least one product in an automated store for a number different products, wherein the store includes a plurality of inclined storage shafts and a service device, which is movable in at least two spatial directions, wherein each storage shaft has at its lower end a first barrier for retaining the products situated in the storage shaft, the service device including at least one inclined buffer shaft, which can receive a plurality of products, wherein:
(a) the buffer shaft is filled with a number of products,
(b) the service device is moved to one of the storage shafts such that the upper end of the buffer shaft is situated at the lower end of the storage shaft,
(c) at least one upper product situated in the buffer shaft is pushed upwardly in the buffer shaft and above the buffer shaft until it is located in the storage shaft at a position at which it can be retained by the first barrier,
(d) the service device is moved to a second storage shaft such that a lower end of the buffer shaft is situated at the upper end of the further storage shaft, and
(e) at least one lower product situated in the buffer shaft is released downwardly into the upper end of the further storage shaft by opening a second barrier arranged at the lower end of the buffer shaft.

17. A method of storing at least one product in an automated store for a number of different products, wherein the store includes a plurality of inclined storage shafts and a service device movable in at least two spatial directions, wherein each storage shaft includes at its lower end a first barrier for retaining the products situated in the storage shaft, the service device having at least one inclined buffer shaft, which can receive a plurality of products, wherein:
(a) the buffer shaft is filled with the at least one product,
(b) the service device is moved to one of the storage shafts such that the upper end of the buffer shaft is located at the lower end of the storage shaft, and
(c) the product in the buffer shaft is pushed upwardly above the buffer shaft until it is situated in a position in the storage shaft, at which it can be retained by the first barrier,
(d) the buffer shaft is again filled with at least one product,
(e) the service device is moved to a further storage shaft such that a lower end of the buffer shaft is situated at the upper end of the further storage shaft, and
(f) at least one lower product situated in the buffer shaft is released downwardly into the further storage shaft by opening a second barrier arranged at the lower end of the buffer shaft.

18. A method as claimed in claim 16 or 17, **characterised in that** in step a), the width of the buffer shaft is matched to a dimension of the at least one product.

19. A method as claimed in of claim 17 or 18, **characterised in that** in step b), the service device is moved to a storage shaft, whose breadth is matched to a dimension of the at least one product.

20. A method as claimed in claim 16 or 17, **characterised in that** the buffer shaft is filled in step a) with different products.

21. A method as claimed in claim 21, **characterised in that**, in step c), a plurality of products are pushed up into the storage shaft.

22. A method as claimed in claim 20, **characterised in that** at least one upper product situated in the buffer shaft is pushed up into a first storage shaft, the service device is moved to a second storage shaft and at least one further product situated in the buffer shaft is pushed up into the second storage shaft.

23. A method as claimed in claim 16, **characterised in that**, in step d), the buffer shaft is filled with a plurality of similar products, which are released in step f) into the further storage shaft.

## Revendications

1. Stock automatisé (1) pour une pluralité d'articles différents, présentant :
plusieurs puits de stockage inclinés (3), chaque puits de stockage (3) comportant, à son extrémité inférieure, un premier dispositif de blocage pour maintenir les articles se trouvant dans le puits de stockage, un appareil de commande (2) pouvant se déplacer dans au moins deux directions spatiales, lequel appareil de commande présente au moins un puits tampon incliné (11), qui peut recevoir plusieurs articles, le puits tampon (11) pouvant être rapproché de l'extrémité inférieure d'un puits de stockage (3), de sorte qu'il puisse recevoir des articles sortant du puits de stockage après un dégagement du premier dispositif de blocage, l'appareil de commande comportant un dispositif (9) pour transporter vers le haut dans un puits de stockage des articles se trouvant dans le puits tampon,
**caractérisé en ce que** le puits tampon (11) présente, à son extrémité inférieure, un deuxième dispositif de blocage pour maintenir les articles se trouvant dans le puits tampon, lequel dispositif peut être dégagé de sorte que les articles se trouvant dans le puits tampon puissent sortir par le bas.

2. Stock automatisé selon la revendication 1, **caractérisé en ce que** le dispositif de transport vers le haut comporte un curseur (9) guidé le long du puits tampon.

3. Stock automatisé selon la revendication 2, **caractérisé en ce que** le curseur forme en même temps le deuxième dispositif de blocage.

4. Stock automatisé selon l'une quelconque des revendications 1 à 3, **caractérisé en ce que** les puits de stockage (3) sont disposés parallèlement de sorte que leurs extrémités inférieures soient disposées dans un même plan.

5. Stock automatisé selon l'une quelconque des revendications 1 à 4, **caractérisé en ce que** l'appareil de commande (2) peut être rapproché d'une extrémité supérieure d'au moins un autre puits de stockage (4), dans lequel, après dégagement du deuxième dispositif de blocage, les articles se trouvant dans le puits tampon (11) peuvent pénétrer dans l'autre puits de stockage (4).

6. Stock automatisé selon la revendication 5, **caractérisé en ce que** les autres puits de stockage (4) sont disposés parallèlement de sorte que leurs extrémités supérieures soient disposées dans un même plan.

7. Stock automatisé selon la revendication 5 ou 6, **caractérisé en ce que**, aux extrémités inférieures des autres puits de stockage (4), est agencé un dispositif de prélèvement, qui délivre les articles sortants à un dispositif de transport.

8. Stock automatisé selon l'une quelconque des revendications 1 à 7, **caractérisé en ce que** le dégagement du premier dispositif de blocage peut être déclenché par le dispositif de commande (2) lorsque celui-ci s'approche du puits de stockage.

9. Stock automatisé selon l'une quelconque des revendications 1 à 8, **caractérisé en ce que** l'appareil de commande présente plusieurs puits tampons (11, 17) avec, respectivement, un deuxième dispositif de blocage correspondant.

10. Stock automatisé selon la revendication 9, **caractérisé en ce que** les puits tampons (11,17) sont disposés l'un sur l'autre et/ou l'un à côté de l'autre.

11. Stock automatisé selon l'une quelconque des revendications 1 à 8, **caractérisé en ce que** plusieurs appareils de commande sont prévus.

12. Appareil de commande (2) pouvant être déplacé dans au moins deux directions spatiales pour un stock automatisé avec plusieurs puits de stockage inclinés (3) destinés à recevoir une pluralité d'articles différents, dans lequel l'appareil de commande (2) présente au moins un puits tampon incliné (11), qui peut recevoir plusieurs articles,
dans lequel le puits tampon est conçu de sorte qu'après un rapprochement de l'extrémité inférieure d'un puits de stockage et le dégagement d'un premier dispositif de blocage du puits de stockage, il puisse recevoir des articles sortant du puits de stockage,
dans lequel le puits tampon présente, à son extrémité inférieure, un second dispositif de blocage pour maintenir les articles se trouvant dans le puits tampon, qui peut être dégagé de sorte que les articles se trouvant dans le puits tampon puissent sortir par le bas,
dans lequel le puits tampon comporte un dispositif (9) pour transporter vers le haut dans un puits de stockage des articles se trouvant dans le puits tampon.

13. Appareil de commande selon la revendication 12, **caractérisé en ce que** le dispositif de transport vers le haut comporte un curseur (9) guidé le long du puits tampon, lequel curseur forme en même temps le deuxième dispositif de blocage.

14. Appareil de commande selon la revendication 12, **caractérisé en ce que** l'appareil de commande (2) peut être rapproché d'une extrémité supérieure d'un puits de stockage (4) de sorte qu'après dégagement du deuxième dispositif de blocage (9), les articles se trouvant dans le puits tampon (11) puissent pénétrer dans le puits de stockage.

15. Appareil de commande selon l'une quelconque des revendications 12 à 14, **caractérisé par** plusieurs puits tampons avec, respectivement, un deuxième dispositif de blocage correspondant, les puits tampons (11,17) étant disposés l'un sur l'autre et/ou l'un à côté de l'autre..

16. Procédé de stockage d'au moins un article dans un stock automatisé destiné à une pluralité d'articles différents, dans lequel le stock présente plusieurs puits de stockage inclinés et un appareil de commande déplaçable dans au moins deux directions spatiales, dans lequel chaque puits de stockage présente, à son extrémité inférieure, un premier dispositif de blocage pour maintenir les articles se trouvant dans le puits de stockage, dans lequel l'appareil de commande comporte au moins un puits tampon incliné qui peut recevoir plusieurs articles, dans lequel :
a) le puits tampon est rempli de plusieurs articles,
b) l'appareil de commande est rapproché de l'un des puits de stockage de sorte que l'extrémité supérieure du puits tampon se trouve à l'extrémité inférieure du puits de stockage,
c) au moins un article se trouvant en haut dans le puits tampon est poussé vers le haut en dehors du puits tampon jusqu'à ce qu'il se retrouve dans le puits de stockage dans une position dans laquelle il peut être maintenu par le premier dispositif de blocage,
d) l'appareil de commande est rapproché d'un autre puits de stockage de sorte qu'une extrémité inférieure du puits tampon se trouve à l'extrémité supérieure de l'autre puits de stockage et,
e) au moins un article se trouvant en bas du puits tampon est délivré par le bas à l'extrémité supérieure de l'autre puits de stockage par dégagement d'un deuxième dispositif de blocage disposé à l'extrémité inférieure du puits tampon.

17. Procédé de stockage d'au moins un article dans un stock automatisé destiné à une pluralité d'articles différents, dans lequel le stock présente plusieurs puits de stockage inclinés et un appareil de commande déplaçable dans au moins deux directions spatiales, dans lequel chaque puits de stockage présente, à son extrémité inférieure, un premier dispositif de blocage pour maintenir les articles se trouvant dans le puits de stockage, dans lequel l'appareil de commande comporte au moins un puits tampon incliné qui peut recevoir plusieurs articles, dans lequel :
a) le puits tampon est rempli par le au moins un article,
b) l'appareil de commande est rapproché de l'un des puits de stockage de sorte que l'extrémité supérieure du puits tampon se trouve à l'extrémité inférieure du puits de stockage, et
c) l'article dans le puits tampon est poussé vers le haut en dehors du puits tampon jusqu'à ce qu'il se retrouve dans le puits de stockage dans une position, dans laquelle il peut être maintenu par le premier dispositif de blocage,
d) le puits tampon est de nouveau rempli par au moins un article,
d) l'appareil de commande est rapproché d'un autre puits de stockage de sorte qu'une extrémité inférieure du puits tampon se trouve à l'extrémité supérieure de l'autre puits de stockage et
e) au moins un article se trouvant en bas du puits tampon est délivré par le bas dans l'autre puits de stockage par dégagement d'un deuxième dispositif de blocage disposé à l'extrémité inférieure du puits tampon.

18. Procédé selon la revendication 16 ou 17, **caractérisé en ce qu'**à l'étape a), la largeur du puits tampon est adaptée à une dimension du au moins un article.

19. Procédé selon l'une quelconque des revendications 17 à 18, **caractérisé en ce qu'**à l'étape b), l'appareil de commande est rapproché d'un puits de stockage, dont la largeur est adaptée à une dimension du moins un article.

20. Procédé selon la revendication 16 ou 17, **caractérisé en ce que** le puits tampon est rempli à l'étape a) de différents articles.

21. Procédé selon la revendication 21, **caractérisé en ce qu'**à l'étape c), plusieurs articles sont poussés vers le haut dans le puits de stockage.

22. Procédé selon la revendication 20, **caractérisé en ce qu'**au moins un article se trouvant en haut du puits tampon est poussé vers le haut dans un premier puits de stockage, déplace l'appareil de commande vers un deuxième puits de stockage et au moins un autre article se trouvant dans le puits tampon est poussé vers le haut dans un deuxième puits de stockage.

23. Procédé selon la revendication 16, **caractérisé en ce qu'**à l'étape d), le puits tampon est rempli de plusieurs articles du même type, qui sont délivrés à l'autre puits de stockage à l'étape f).
